(19) Europäisches Patentamt / European Patent Office / Office européen des brevets

(11) **EP 2 500 544 B1**

(12) **EUROPEAN PATENT SPECIFICATION**

(45) Date of publication and mention
of the grant of the patent:
**22.05.2019 Bulletin 2019/21**

(21) Application number: **09851261.9**

(22) Date of filing: **11.11.2009**

(51) Int Cl.:
*F16C 33/66* (2006.01)    *F16C 33/10* (2006.01)
*F16C 27/02* (2006.01)    *F16C 27/04* (2006.01)
*F01D 25/18* (2006.01)    *F01D 25/16* (2006.01)
*F02B 39/00* (2006.01)    *F16C 17/02* (2006.01)
*F16C 19/54* (2006.01)    *F16C 17/18* (2006.01)

(86) International application number:
**PCT/JP2009/069216**

(87) International publication number:
**WO 2011/058627 (19.05.2011 Gazette 2011/20)**

(54) **BEARING DEVICE**

LAGERVORRICHTUNG

DISPOSITIF DE PALIER

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**19.09.2012 Bulletin 2012/38**

(73) Proprietor: **TOYOTA JIDOSHA KABUSHIKI
KAISHA
Toyota-shi, Aichi-ken, 471-8571 (JP)**

(72) Inventor: **TANADA, Masayuki
Toyota-shi
Aichi 471-8571 (JP)**

(74) Representative: **Intès, Didier Gérard André et al
Cabinet Beau de Loménie
158 rue de l'Université
75340 Paris Cedex 07 (FR)**

(56) References cited:
**EP-A1- 0 794 319**     **EP-A2- 0 884 490**
**DE-U1- 9 100 928**     **DE-U1-202004 017 194**
**JP-A- 9 242 554**     **JP-A- 2005 106 108**
**JP-A- 2005 171 796**     **JP-A- 2006 153 122**
**JP-A- 2007 170 296**     **JP-A- 2009 167 872**
**JP-U- S5 084 646**     **US-A- 4 676 667**
**US-A- 4 983 050**     **US-A1- 2009 110 572**

**Description**

Technical Field

The present invention relates to a bearing device including a bearing portion to support a rotor shaft in a bearing housing. In particular, the present invention relates to a bearing device including an oil hole that penetrates the bearing portion from an outer circumference to an inner circumference of the bearing portion.

Background Art

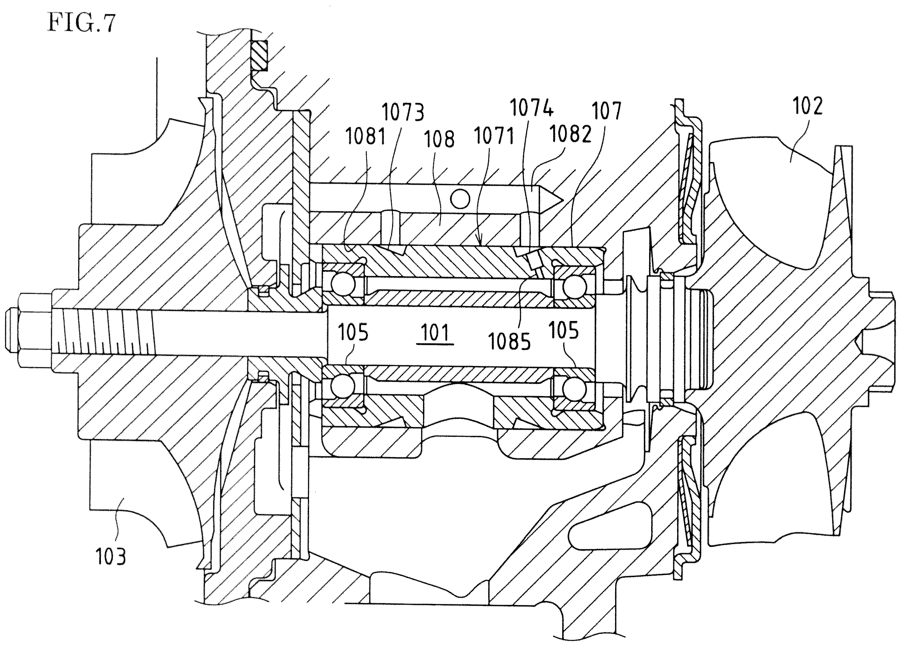

FIG. 7 shows an example of a turbocharger including a bearing device of this type. In FIG. 7, a turbine blade 102 is rotatably and integrally disposed at one end portion of a turbine shaft 101. An impeller 103 of a compressor is rotatably and integrally disposed at the other end portion of the turbine shaft 101.

The turbine shaft 101 is supported in a freely rotatable manner by a bearing portion that includes a bearing holder 107 and ball bearings 105 in a bearing housing 108. The ball bearings 105 are fitted in both end portions of the bearing holder 107.

The bearing holder 107 has an approximately cylindrical shape and is fitted in the bearing housing 8 with a predetermined gap maintained in the radial direction. Two grooves 1073, 1074 are circumferentially formed on an outer circumference 1071 of the bearing holder 107. Circular oil paths are formed between the grooves 1073, 1074 and a bearing holder support surface 1081 in the bearing housing 108.

A lubricant ejection hole (what is called an oil jet) 1085 that extends to an inner circumference of the bearing holder 107 is formed in the groove 1074, which is on the side of the turbine blade 102. The lubricant in the groove 1074 is ejected toward the ball bearing 105 on the right side of the figure, which is readily affected by heat from the side of turbine blade 102, so as to cool the ball bearing 105.

Patent documents 1 to 3 disclose turbochargers each including a bearing device that includes the above-described lubricant ejection hole.

It is noted that patent document 4 fails to disclose the lubricant ejection hole, but discloses a technology such that a cylindrical space for foreign matter storage is disposed in the middle of a lubricant path, and foreign matters in the lubricant are removed through the foreign matter storage. Patent document 5 discloses a bearing device according to the preamble of claim 1.

Related Art Documents

Patent Documents

Patent document 1: Japanese Unexamined Utility Model Application Publication No.1990-72329.
Patent document 2: Japanese Unexamined Utility Model Application Publication No. 1994-1737A
Patent document 3: Japanese Unexamined Patent Application Publication No. 2008-504484.
Patent document 4: Japanese Unexamined Utility Model Application Publication No. 1993-14527.
Patent document 5: US patent No. 4,676,667.

Summary of Invention

Problems to be Solved by the Invention

Incidentally, the lubricant used to lubricate and cool the bearing portion oftentimes contains foreign matters, such as a burr and casting sand, associated with processing. In this case, there is a possibility that the foreign matters contained in the lubricant block an oil hole, such as the above-described lubricant ejection hole, that penetrates through the bearing portion from the outer circumference to the inner circumference of the bearing portion. When the lubricant ejection hole is blocked, it is possible that the temperature of the ball bearing increases, and an appropriate oil film cannot be maintained in the ball bearing.

When the bearing portion is a floating bearing (a semi-floating bearing or a full floating bearing), the oil path penetrates through the floating bearing from the outer circumference to the inner circumference of the floating bearing, and thus serves as an oil path to supply lubricant supplied from the side of the bearing housing to the side of the turbine shaft. In this case, it is possible that when the oil path is blocked, an appropriate oil film between the turbine shaft and the floating bearing cannot be maintained.

It is of course possible to reduce the possibility of the oil hole being blocked by foreign maters if a fine oil filter substantially dedicated to the turbocharger is used. However, in this case, other problems occur in that the piece-part count increases, and the size of the device incorporating the oil filter increases.

The present invention has been achieved in view of the above circumstances, and it is an object of the present invention to provide a bearing device that decreases, without providing additional components such as an oil filter, the possibility that an oil hole penetrating through a bearing portion from an outer circumference to an inner circumference of the bearing portion is blocked by foreign matters contained in oil.

Means of Solving the Problems

In order to solve the above-described problems, a bearing device of the present invention is configured as follows.

A bearing device according to the present invention is defined by claim 1.

With the bearing device thus configured, since the maximum gap in the radial direction of the foreign matter regulating gap is smaller than the minimum internal diameter of the oil hole, there is a high possibility that foreign matters that can pass through the foreign matter regulating gap pass through the oil hole. This reduces the possibility of the oil hole being blocked by the foreign matters contained in oil.

The bearing portion supports the rotor shaft in the bearing housing with an oil film damper formed between the bearing portion and the bearing housing.

With the bearing device thus configured, the possibility of the oil hole being blocked by the foreign matters contained in oil reduces without providing an additional oil filter substantially dedicated to the bearing device. This ensures the necessary amount and pressure of oil to form the oil film damper without concern over reductions in the amount and pressure of the supplied oil caused by the mounting of the oil filter.

In the bearing device of the present invention, a sum of a flow path area of the oil hole and a flow path area of an oil film damper forming gap that forms the oil film damper in a downstream side of the foreign matter regulating gap is smaller than a flow path area of the foreign matter regulating gap.

With the bearing device thus configured, the necessary oil amount of oil to be discharged from the oil hole and the necessary oil amount of oil to be supplied to the oil film damper forming gap are readily obtained without increasing the amount and pressure of oil to be supplied to the bearing device.

For example, the bearing portion may be fitted in the bearing housing, and may include a bearing holder configured to form an oil film damper between the bearing holder and the bearing portion and may include a ball bearing supporting the rotor shaft in the bearing holder. The circular oil path may be formed between the bearing housing and bearing holder in the circumferential direction. The oil hole may include an oil ejection hole penetrating through the bearing holder from an outer circumference to an inner circumference of the bearing holder so as to receive a supply of oil from the circular oil path through the foreign matter regulating gap and so as to eject the oil toward the ball bearing or to a vicinity of the ball bearing.

For example, bearing portion may include a semi-floating bearing axially non-rotatably fitted in the bearing housing.

For example, the bearing portion may include a full floating bearing axially rotatably fitted in the bearing housing.

Preferably, a through hole is formed in the bearing housing. The through hole may communicate with the circular oil path so as to collect foreign matters in the circular oil path.

With the bearing device thus configured, the foreign matters in the oil that cannot pass through the foreign matter regulating gap are collected into the through hole through the circular oil path and discharged from the bearing housing. This reduces the possibility that the foreign matters are left in the circular oil path and become engaged with the foreign matter regulating gap.

Preferably, a recessed portion is formed in the bearing housing. The recessed portion may communicate with the circular oil path so as to collect foreign matters in the circular oil path.

With the bearing device thus configured, the foreign matters in the oil that cannot pass through the foreign matter regulating gap are collected into the recessed portion through the circular oil path. This reduces the possibility that the foreign matters are left in the circular oil path and become engaged with the foreign matter regulating gap. Employing a recessed portion instead of a through hole to collect the foreign matters minimizes the reduction in oil pressure in the circular oil path. This ensures that the oil pressure in the oil film damper forming gap is readily maintained, and this facilitates formation of a preferable oil film damper.

Preferably, a through hole is formed in the bearing housing. The through hole may communicate with a lowest position of the circular oil path so as to collect foreign matters in the circular oil path.

With the bearing device thus configured, the foreign matters in the oil that cannot pass through the foreign matter regulating gap, in particular, foreign matters that easily precipitate in the oil, fall down to the lowest position of the circular oil path, and are collected into the through hole and discharged from the bearing housing. This further reduces the possibility that the foreign matters are left in the circular oil path and become engaged with the foreign matter regulating gap.

Preferably, a recessed portion is formed in the bearing housing. The recessed portion may communicate with a lowest position of the circular oil path so as to collect foreign matters in the circular oil path.

With the bearing device thus configured, the foreign matters in the oil that cannot pass through the foreign matter regulating gap, in particular, foreign matters that easily precipitate in the oil, fall down to the lowest position of the circular oil path and are collected into the recessed portion. This further reduces the possibility that the foreign matters are left in the circular oil path and become engaged with the foreign matter regulating gap. Employing a recessed portion instead of a through hole to collect the foreign matters minimizes the reduction in oil pressure in the circular oil path. This ensures that the oil pressure in the oil film damper forming gap is readily maintained, and this facilitates formation of a preferable oil film damper.

Effects of the Invention

The present invention reduces, without providing additional components such as an oil filter, the possibility that the oil hole penetrating through the bearing portion from the outer circumference to the inner circumference of the bearing portion is blocked by foreign matters contained in oil.

Brief Description of the Drawings

FIG. 1 is a cross-sectional view of a main part of a turbocharger that includes a bearing device according to a first embodiment of the present invention.

FIG. 2 is a cross-sectional view of the bearing device according to the first embodiment of the present invention. However, a bearing holder is not shown in the cross-sectional view.

FIG. 3 is another cross-sectional view of the bearing device according to the first embodiment of the present invention. However, the bearing holder is not shown in the cross-sectional view. FIG. 3 is also used to describe a modification of a foreign matter collection portion.

FIG. 4 is a cross-sectional view of a main part of a turbocharger that includes a bearing device according to a second embodiment of the present invention.

FIG. 5 is a cross-sectional view of a main part of a turbocharger that includes a bearing device according to a third embodiment of the present invention.

FIG. 6 is a cross-sectional view of a main part of a turbocharger that includes a bearing device according to a fourth embodiment of the present invention.

FIG. 7 is a cross-sectional view of a main part of a turbocharger that includes a bearing device according to a conventional example.

Modes for Carrying out the Invention

[First Embodiment]

-Configuration of Turbocharger-

A first embodiment of the present invention will be described.

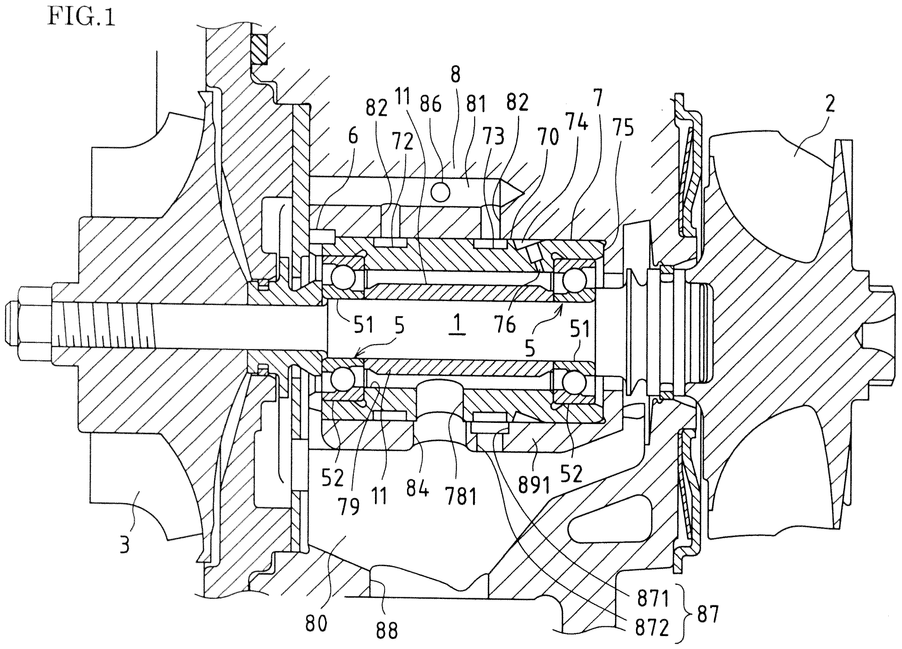

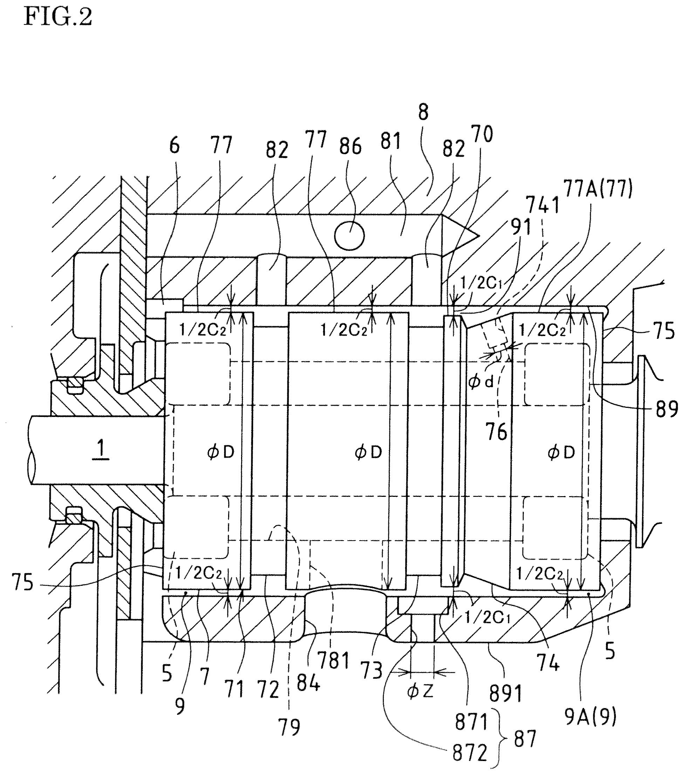

FIG. 1 shows a cross-sectional view of a turbocharger that includes a bearing device of the present invention. FIG. 2 shows an enlarged view of a main part of FIG. 1.

As shown in FIG. 1, a turbine blade 2 is rotatably and integrally disposed at one end portion of a turbine shaft 1 (rotor shaft), and an impeller 3 of a compressor is rotatably and integrally disposed at the other end portion of the turbine shaft 1. The turbine blade 2 is disposed at an exhaust gas flow path in a turbine housing and rotated by the exhaust gas flowing in the exhaust gas flow path. The impeller 3 is disposed at a fresh air path in a compressor housing (not shown). The impeller 3 is rotated by the rotational torque of the turbine blade 2 transmitted via the turbine shaft 1, so as to send fresh air to an intake surge tank, which is not shown, while adding pressure on the fresh air.

In the bearing housing 8, the turbine shaft 1 is rotatably supported by a bearing portion that includes a bearing holder 7 and a pair of ball bearings 5.

The ball bearings 5 are each a radial bearing to support load acting orthogonal to the rotating shaft, and are fitted in both end portions of the bearing holder 7, described later. It is noted that reference numeral 11 denotes a sleeve 11 that is fitted onto the outer circumference of the turbine shaft 1 between inner rings 51 of the ball bearings 5. The sleeve 11 is disposed to maintain the distance between the inner rings 51 of the ball bearings 5.

The bearing holder 7 has an approximately cylindrical shape and is non-rotatably fitted in the bearing housing 8. That is, the bearing holder 7 is secured to the bearing housing 8 with a pin 6 to prohibit rotation about the axis of the cylindrical shape. However, a predetermined gap is secured between the bearing holder 7 and the bearing housing 8 to form an oil film damper, which allows the bearing holder 7 to travel in the radial direction within the range of this gap.

As shown in FIG. 2, on an outer circumference 71 of the bearing holder 7, a first groove 72, a second groove 73, and a third groove 74 are formed in parallel to each other at intervals in the circumferential direction. Circular oil paths are formed between the grooves 72 to 74 and a cylindrical bearing holder support surface 89 formed in the bearing housing 8.

The circular oil paths formed between the first groove 72 and the bearing holder support surface 89 and between the second groove 73 and the bearing holder support surface 89 communicate with diverging paths 82 of a lubricant supply passage 81, described later. A lubricant is supplied from the diverging paths 82. The lubricant supplied to the first groove 72 and the second groove 73 flows to both axial directions of the turbine shaft 1, and is supplied to an approximately circular gap space 9 formed between the outer circumference 71 of the bearing holder 7 and the bearing holder support surface 89 of the bearing housing 8. The lubricant supplied to the gap space 9 forms an oil film damper to attenuate vibrations between the bearing holder 7 and the bearing housing 8.

The lubricant supplied to both axial directions of the turbine shaft 1 from the first groove 72 and the second groove 73 is also supplied to the third groove 74, gaps (not shown) between end surfaces 75 of the bearing holder 7 and walls opposite the end surfaces 75, ball bearings 5, the turbine shaft 1, and the like.

The third groove 74, among the grooves 72 to 74, is closest to the side of the turbine blade 2. A lubricant ejection hole (what is called an oil jet) 76 extends from the third groove 74 to an inner circumference 79 of the bearing holder 7.

The lubricant ejection hole 76 ejects a lubricant toward the ball bearing 5 or to the vicinity of the ball bearing 5, and is disposed to cool the ball bearing 5. It is noted that the lubricant ejection hole 76 shown in FIG. 1 is a two-stage hole having different large and small diameters such that the diameter on the inner circumference side of the bearing holder 7 is small.

Reference numeral 781 denotes an outlet for the lubricant and is formed at a lower portion of the bearing holder 7 to communicate with the inner circumference 79 and the outer circumference 71 of the bearing holder 7. The outlet 781 is disposed to downwardly discharge the lubricant flowing into the bearing holder 7.

The bearing housing 8 is coupled between the turbine housing and the compressor housing. The lubricant supply passage 81 is an oil path to supply the lubricant and formed in the bearing housing 8. The lubricant supply passage 81 diverges in two on its downstream side and communicates with the circular oil paths formed between the bearing holder support surface 89 and the first groove 72 and the second groove 73 of the bearing holder 7 (direct communication is implemented, without the intermediation of a foreign matter regulating gap and an oil film damper forming gap, which will be described later).

On the bearing holder support surface 89 of the bearing holder 8, a foreign matter collection portion 87 is disposed. The foreign matter collection portion 87 communicates with the lowest position of the circular oil path formed between the second groove 73 of the hearing holder 7 and the bearing holder support surface 89. It is noted that the foreign matter collection portion 87 directly communicates with the circular oil path without the intermediation of the foreign matter regulating gap and the oil film damper forming gap, which will be described later. The foreign matter collection portion 87 is disposed to collect foreign matters precipitated from the second groove 73 of the bearing holder 7. The foreign matter collection portion 87 exemplified in the drawings is formed at the lowest position of the bearing holder support surface 89 of the bearing holder 8, and the foreign matter collection portion 87 is a through hole that penetrates through a periphery wall 891 of the bearing housing 8. The foreign matter collection portion 87 includes a large diameter hole portion 871 and a small diameter hole portion 872. The small diameter hole portion 872 has a diameter smaller than that of the large diameter hole portion 871 and is continuously disposed at a lower portion of the large diameter hole portion 871. Preferably, the large diameter hole portion 871 includes an internal diameter equal to or slightly larger than the groove width of the second groove 73. It is preferred, however, that the large diameter hole portion 871 does not communicate with the outlet 781 and the third groove 74. Regarding the size of the small diameter hole portion 872, it is preferred that its opening area is as small as possible to form a preferable oil film damper. It is noted that the foreign matter collection portion 87 may communicate with the circular oil path at a position different from its lowest position.

Reference numeral 84 denotes an outlet for the lubricant and is formed at the lowest position of the periphery wall 891 of the bearing housing 8. The outlet 84 is continuous from the outlet 781. The outlet 84 is also disposed to downwardly discharge the lubricant flowing into the bearing holder 7.

Reference numeral 88 denotes an oil discharge outlet of the turbocharger. Lubricants flowing from the outlets 781, 84, and other portions are discharged from the oil discharge outlet 88 to the downward direction of the turbocharger.

-Size of Bearing Holder-

Next, the dimensions of the bearing holder 7 will be described by referring to FIG. 2. On the outer circumference 71 of the bearing holder 7, oil film damper forming portions 77, the above-described first to third grooves 72 to 74, and a foreign matter regulating-gap forming portion 70, described later, are formed. The oil film damper forming portions 77 each have a diameter $\phi D$, which is set to ensure a gap (hereinafter referred also to as an "oil film damper forming gap") in which to form the oil film damper between the outer circumference 71 and the bearing holder support surface 89 of the bearing holder 8.

One of the oil film damper forming portions 77 is formed on the side of the impeller 3 relative to the first groove 72. Another oil film damper forming portion 77 is formed between the first groove 72 and the second groove 73. The other oil film damper forming portion 77 is formed on the side of the turbine blade 2 relative to the third groove 74. The diameter $\phi D$ of each oil film damper forming portion 77 is set to ensure a maximum gap $C_2$ in the radial direction with respect to the bearing holder support surface 89 of the bearing holder 8 (the maximum gap $C_2$ is a difference between the internal diameter of the bearing holder support surface 89 and the external diameter of the oil film damper forming portion 77). For example, the maximum gap $C_2$ in the radial direction may be set at approximately 0.1 mm.

The foreign matter regulating-gap forming portion 70 is formed between the second groove 73 and the third groove 74 of the outer circumference 71 of the bearing holder 7. In the gap between the foreign matter regulating-gap forming portion 70 and the bearing holder support surface 89 of the bearing holder 8, a foreign matter regulating gap 91 is formed to block passing of a foreign matter of a size that is equal to or larger than a predetermined size. The maximum gap in the radial direction of the foreign matter regulating gap 91 is denoted $C_1$.

Incidentally, the above-described dimensions $C_1$, $C_2$, and D, and a minimum internal diameter d of the lubricant ejection hole 76 satisfy the following formula 1.

$$C_2 + d^2/2D < C_1 < d \ ... \ (1)$$

Based on the formula 1, a formula 2 is obtained as follows.

$$C_2 + d^2/2D < C_1 \ ... \ (2)$$

Multiplying both sides of the formula 2 by $\pi D/2$ results in the following.

$$C_2\pi D/2 + \pi d^2/4 < C_1\pi D/2 \ ... \ (3)$$

$C_2\pi D/2$ denotes a flow path area of the lubricant passing between the oil film damper forming portion 77 and the bearing holder support surface 89. $\pi d^2/4$ denotes a flow path area of the lubricant ejection hole 76. $C_1\pi D/2$ denotes a flow path area of the lubricant passing through the foreign matter regulating gap 91.

An internal diameter $\phi Z$ of the small diameter hole portion 872 of the foreign matter collection portion 87 satisfies the following formula 4.

$$Z > C_1 \ ... \ (4)$$

Exemplary dimensions that satisfy the requirements of the above-described formulas 1 to 4 include $C_1$= 0.2 mm, $C_2$= 0.1 mm, d = 0.6, D = 21, Z = 1.5.

In a turbocharger including the bearing holder 7 and bearing housing 8 with their dimensions set in the above-described manner, when a lubricant is supplied by discharge from an oil supply hole 86 under a pressure that is equal to or higher than a predetermined level (a pressure that is equal to or higher than the necessary pressure to form the oil film damper), the lubricant is first supplied to the first groove 72 and the second groove 73 through the lubricant supply passage 81 and the diverging paths 82. Then, the lubricant is supplied to the third groove 74, the gap space 9, and the like via the first groove 72 and the second groove 73. This causes the oil film damper to be formed and the lubricant to be ejected from the lubricant ejection hole 76.

In this case, the relation of the maximum gap $C_1$ in the radial direction of the foreign matter regulating gap 91 and the minimum internal diameter d of the lubricant ejection hole 76 is represented as follows based on the formula 1.

$$C_1 < d \dots (5)$$

Accordingly, there is a high possibility that the foreign matters passable through the foreign matter regulating gap 91 pass through the lubricant ejection hole 76. This reduces the possibility of the lubricant ejection hole 76 being blocked by the foreign matters in the lubricant.

Foreign matters that cannot pass through the foreign matter regulating gap 91 fall in the downward direction of the second groove 73 and are collected into the foreign matter collection portion 87. Further, the foreign matters collected into the foreign matter collection portion 87 are further discharged into the downward direction through the small diameter hole portion 872 of the foreign matter collection portion 87. This prevents the foreign matters form accumulating at the lower portion of the second groove 73. This, in turn, reduces the possibility that the foreign matters are left in the second groove 73 and become engaged with the foreign matter regulating gap 91.

The lubricant supplied to the lubricant ejection hole 76 and to a gap space 9A, which is in the downstream side relative to the inlet of the lubricant ejection hole 76, is supplied through the foreign matter regulating gap 91. In this respect, as the formula 3 shows, the sum of the flow path area of the lubricant ejection hole 76 and the flow path area of the gap space 9A (oil film damper forming gap) is smaller than the flow path area of the foreign matter regulating gap 91. This eliminates the need for increasing the amount and pressure of the lubricant to be supplied, and ensures that the amount of the lubricant ejected from the lubricant ejection hole 76 is on the same level as the level associated with a turbocharger according to a conventional example (see FIG. 7). Also, a sufficient amount of oil is supplied to the gap space 9A, which is in the downstream side relative to the third groove 74, where the lubricant ejection hole 76 is disposed. Thus, a preferable oil film damper is formed in the gap space 9A.

The bearing device according to this embodiment reduces, without providing a fine oil filter substantially dedicated to the turbocharger, the possibility of the lubricant ejection hole being blocked by foreign matters. Specifically, providing additional components such as a fine oil filter involves problems such as enlargement of the turbocharger, an increase in the piece-part count, and a reduction in oil pressure of the oil film damper. The bearing device according to this embodiment eliminates these problems and reduces the possibility of the lubricant ejection hole being blocked by foreign matters.

With the bearing device according to this embodiment, the foreign matter regulating gap 91 is disposed at a position close to the lubricant ejection hole 76 (within the range of the entire length of the bearing holder 7). This prevents foreign matters such as chips from entering the lubricant ejection hole 76 when the foreign matters occur at a place relatively close to the lubricant ejection hole 76 such as in the lubricant supply passage 81 in the bearing housing 8.

The bearing device according to this embodiment reduces the possibility of the lubricant ejection hole being blocked by foreign matters without enlarging the diameter of the lubricant ejection hole. Specifically, when the diameter of the lubricant ejection hole is enlarged, it is necessary to enhance the abilities (the amount and pressure of oil to be supplied) of the oil supply device (oil pump) on the upstream side, in order to maintain the force of the lubricant ejected from the lubricant ejection hole. This, however, increases the amount of oil at the bearing portion and increases the agitation resistance of oil. This, as a result, can degrade the driving response of the turbocharger. Additionally, enhancing the abilities of the oil supply device on the upstream side can cause an oil leakage to the fresh air flow path and the exhaust gas flow path. The bearing device according to this embodiment reduces the possibility of the lubricant ejection hole being blocked by foreign matters without enhancing the abilities of the oil supply device. This eliminates the above-described problems associated with the enhancement of the abilities of the oil supply device.

-Modified Example of Foreign Matter Collection Portion-

The foreign matter collection portion 87 penetrates through the periphery wall 891 of the bearing housing 8, thus providing communication between the interior of the second groove 73 and a waste oil space 80, which is a pressure release region (region close to atmospheric pressure). Accordingly, it is possible that the pressure in the second groove 73 decreases and a preferable oil film damper cannot be maintained. In order to maintain the oil pressure in the second groove 73 and the oil film damper forming gap, it is necessary to enhance the abilities (the amount and pressure of oil to be supplied) of the oil supply device (oil pump) on the upstream side.

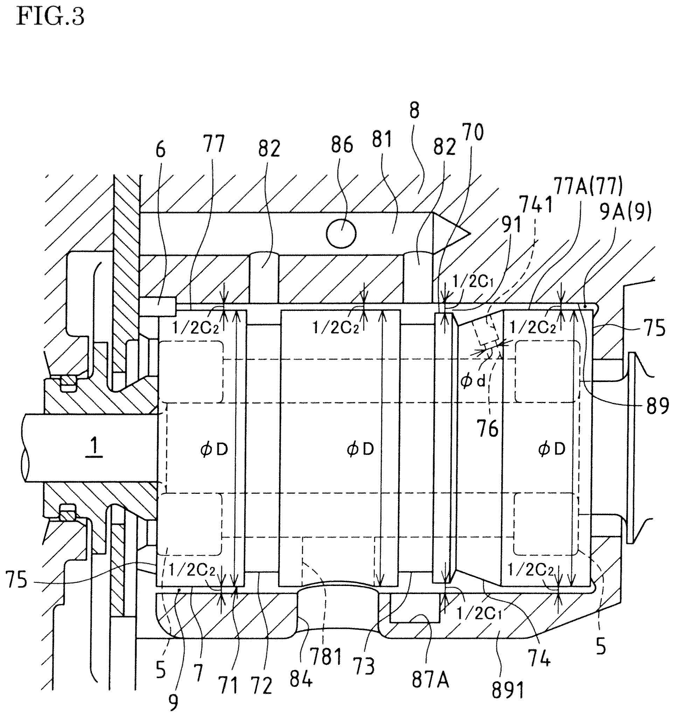

However, as shown in FIG. 3, the pressure in the second groove 73 can be maintained with the use of a foreign matter collection portion 87A. which is a bottomed recessed portion that does not directly communicate with the pressure release region. It is noted that the foreign matter collection portion 87A is also disposed at a position to communicate with the lowest position of the circular oil path formed between the second groove 73 and the bearing holder support surface 89 in the bearing housing 8 (direct communication is implemented without the intermediation of the foreign matter regulating gap and the oil film damper forming gap), and is disposed at the lowest position of the bearing holder support surface 89 of the bearing housing 8. Preferably, the foreign matter collection portion 87A also does not communicate with the outlet 781 and the third groove 74. It is noted that the foreign matter collection portion 87A may communicate with the circular oil path at a position different from its lowest position.

[Second Embodiment]

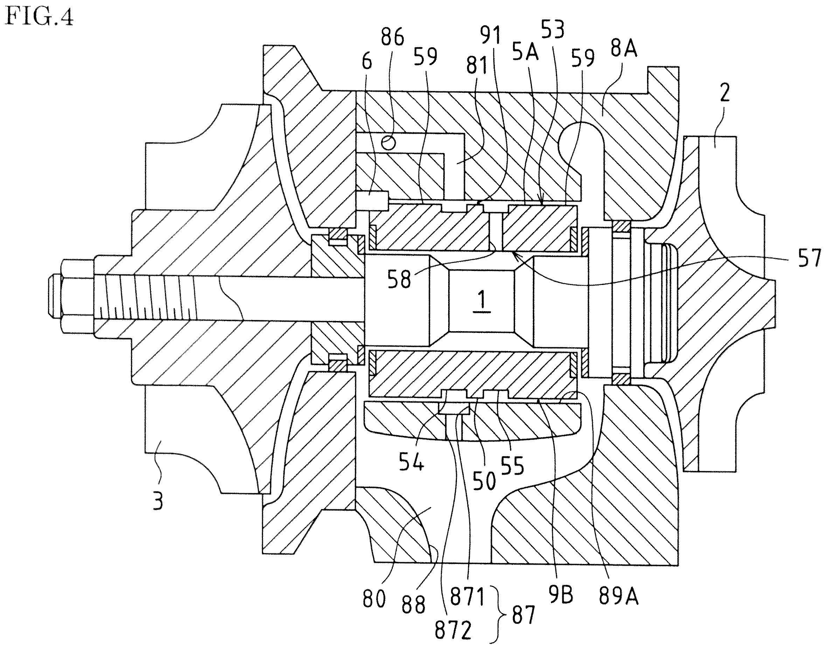

Next, a second embodiment of the present invention will be described by referring to FIG. 4. It is noted that like reference numerals designate corresponding or identical elements throughout the first and second embodiments, and these elements will not be described here.

The bearing device provided in the turbocharger according to this embodiment uses a semi-floating bearing 5A as a bearing portion to support the turbine shaft 1 in a bearing housing 8A.

The semi-floating bearing 5A has an approximately cylindrical shape and is non-rotatably fitted in the bearing housing 8A. That is, the semi-floating bearing 5A is secured to the bearing housing 8A with the pin 6 to prohibit rotation about the axis of the cylindrical shape. However, a predetermined gap is secured between the semi-floating bearing 5A and the bearing housing 8A to form an oil film damper between the semi-floating bearing 5A and the bearing housing 8A, which allows the semi-floating bearing 5A to travel in the radial direction within the range of this gap.

On an outer circumference 53 of the semi-floating bearing 5A, a first groove 54 and a second groove 55 are formed in the circumferential direction at intervals. Circular oil paths are formed between the grooves 54 and 55 and a cylindrical bearing support surface 89A in the bearing housing 8A. The circular oil paths communicate with the lubricant supply passage 81 disposed in the bearing housing 8A (direct communication is implemented without the intermediation of the foreign matter regulating gap and the oil film damper forming gap), so as to receive a supply of lubricant directly from the lubricant supply passage 81. The lubricant supplied to the first groove 54 flows to both axial directions of the turbine shaft 1, and is supplied to an approximately circular gap space 9B formed between the outer circumference 53 of the semi-floating bearing 5A and the bearing support surface 89A of the bearing housing 8A. The lubricant supplied to the gap space 9B forms an oil film damper to attenuate vibrations between the semi-floating bearing 5A and the bearing housing 8A.

The lubricant supplied to the gap space 9B is also supplied to the second groove 55, gaps (not shown) between end surfaces of the semi-floating bearing 5A and walls opposite the end surfaces, the turbine shaft 1, and the like.

The second groove 55 is disposed on the side of the turbine blade 2 relative to the first groove 54. An oil hole 58 is formed to communicate the second groove 55 with an inner circumference 57 of the semi-floating bearing 5A. The oil hole 58 functions as an oil path through which the lubricant supplied to the second groove 55 is supplied to the inner circumference 57 of the semi-floating bearing 5A. The lubricant supplied to the inner circumference 57 of the semi-floating bearing 5A is supplied between the inner circumference 57 of the semi-floating bearing 5A and the turbine shaft 1 so as to form an oil film damper and a lubricant film.

On the outer circumference 53 of the semi-floating bearing 5A, oil film damper forming portions 59, the above-described grooves 54 and 55, and a foreign matter regulating-gap forming portion 50 are formed. The oil film damper forming portions 59 each have a diameter set to ensure a gap (hereinafter also referred to as an "oil film damper forming gap") in which to form the oil film damper between the outer circumference 53 and the bearing support surface 89A of the bearing housing 8A. One of the oil film damper forming portions 59 is formed on the side of the impeller 3 relative to the first groove 54, while another oil film damper forming portion 59 is formed on the side of the turbine blade 2 relative to the third groove 55.

The foreign matter regulating-gap forming portion 50 is formed between the first groove 54 and the second groove 55. In the gap between the foreign matter regulating-gap forming portion 50 and the bearing support surface 89A of the bearing housing 8A, a foreign matter regulating gap 91 is formed to block passing of a foreign matter of a size that is equal to or larger than a predetermined size.

Similarly to the first embodiment, the bearing support surface 89A of the bearing housing 8A according to the second embodiment includes the foreign matter collection portion 87, which communicates with the lowest position of the circular oil path formed between the first groove 54 of the semi-floating bearing 5A and the bearing support surface 89A (direct communication is implemented without the intermediation of the foreign matter regulating gap and the oil film damper forming gap). The foreign matter collection portion 87 may be a through hole as shown in the figure, or may be the above-described foreign matter collection portion 87A having a recessed portion (see FIG. 3). Also, the foreign matter collection portion 87 or 87A may communicate with the circular oil path at a position different from its lowest position.

In this embodiment, similarly to the first embodiment, the dimensions of the portions of the semi-floating bearing 5A are set. Specifically, the maximum gap in the radial direction of the foreign matter regulating gap 91 is smaller than the minimum internal diameter of the oil hole 58. This reduces the possibility of the oil hole 58 being blocked by foreign matters in the lubricant.

The sum of the flow path area of the oil hole 58 and the flow path area of the gap space 9B, which is in the downstream side relative to the inlet of the oil hole 58 (which is the gap space between the bearing support surface 89A and the outer circumference of the semi-floating bearing 5A), is smaller than the flow path area of the foreign matter regulating gap 91. This eliminates the need for increasing the amount and pressure of the lubricant to be supplied, and ensures a sufficient amount of oil to be supplied to the side of the turbine shaft 1 through the oil hole 58. Also, a sufficient amount of oil is supplied to the gap space 9B, which is in the downstream side relative to the second groove 55, where the oil hole 58 is disposed. Thus, a preferable oil film damper is formed in the gap space 9B.

[Third Embodiment]

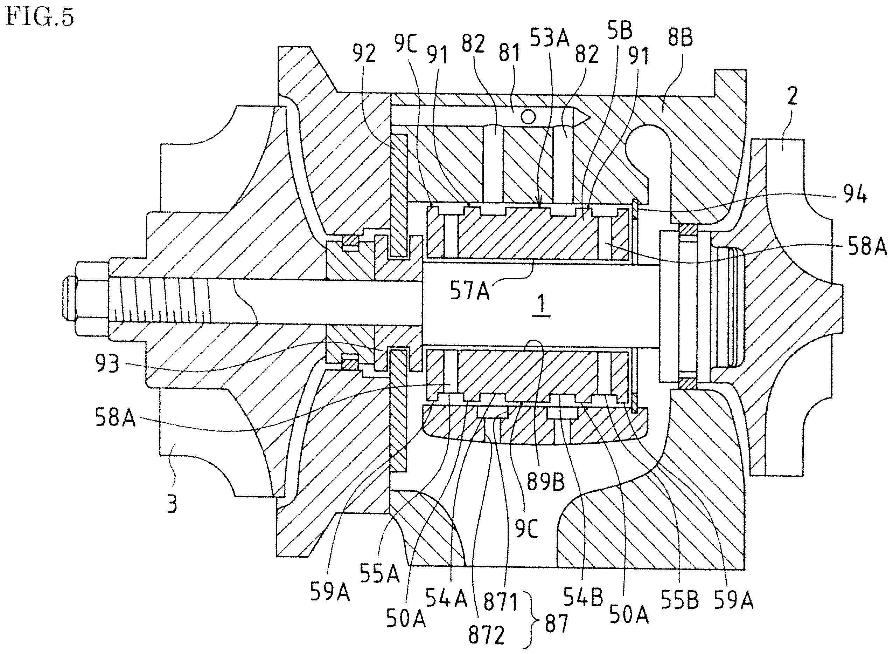

Next, a third embodiment will be described by referring to FIG. 5. It is noted that like reference numerals designate corresponding or identical elements throughout the first to third embodiments, and these elements will not be described here.

The bearing device provided in the turbocharger according to this embodiment uses a full floating bearing 5B as a bearing portion to support the turbine shaft 1 in a bearing housing 8B.

The full floating bearing 5B has an approximately cylindrical shape and is rotatably fitted in the bearing housing 8B. A predetermined gap is secured between the full floating bearing 5B and the bearing housing 8B to form the oil film damper and the lubricant film, which allows the semi-floating bearing 5B to travel in the radial direction within the range of this gap.

Reference numeral 92 denotes a thrust bearing to receive the thrust force of the turbine shaft while rotating. Reference numeral 93 denotes a ring member that is rotatably and integrally fitted onto the turbine shaft 1 and engaged with the thrust bearing 92 in the axial direction. Reference numeral 94 denotes a regulating member secured in the bearing housing 8B. The full floating bearing 5B is allowed restricted movement in the axial direction within a predetermined range by the ring member 93 and the regulating member 94.

On an outer circumference 53A of the full floating bearing 5B, a first groove 54A, a second groove 54B, a third groove 55A, and a fourth groove 55B are formed in the circumferential direction at intervals. Circular oil paths are formed between the grooves 54A, 54B, 55A, and 55B and a cylindrical bearing support surface 89B in the bearing housing 8B. The circular oil paths formed between the first groove 54A and the bearing holder support surface 89B and between the second groove 54B and the bearing support surface 89B communicate with the diverging paths 82 of the lubricant supply passage 81 (direct communication is implemented without the intermediation of the foreign matter regulating gap and the oil film damper forming gap), so as to receive a supply of lubricant directly from the diverging paths 82. The lubricant supplied to the first groove 54A and the second groove 54B flows to both axial directions of the turbine shaft 1 and is supplied between the outer circumference 53A of the full floating bearing 5B and the bearing support surface 89B. The lubricant supplied to a gap space 9C forms the oil film damper to attenuate vibrations between the full floating bearing 5B and the bearing housing 8B.

The lubricant supplied to the gap space 9C is also supplied to the third groove 55A, the fourth groove 55B, both end surfaces of the full floating bearing 5B, the turbine shaft 1, and the like.

The third groove 55A and the fourth groove 55B are respectively disposed at axially external sides of the first groove 54A and the second groove 54B. Oil holes 58A respectively penetrate from the third groove 55A and the fourth groove 55B (the outer circumference 53A of the full floating bearing 5B) to an inner circumference 57A of the full floating bearing 5B.

The oil holes 58A each function as an oil path through which the lubricant supplied to the third groove 55A or the fourth groove 55B is supplied to the inner circumference 57A of the full floating bearing 5B. The lubricant supplied to the inner circumference 57A of the full floating bearing 5B is supplied between the inner circumference 57A of the full floating bearing 5B and the turbine shaft 1 so as to form the oil film damper and the lubricant film.

On the outer circumference 53A of the full floating bearing 5B, oil film damper forming portions 59A, the grooves 54A, 54B, 55A, and 55B, and foreign matter regulating-gap forming portions 50A are formed. The oil film damper forming portions 59A each have a diameter set to ensure a gap (hereinafter also referred to as an "oil film damper forming gap") in which to form the oil film damper between the outer circumference 53A and the bearing support surface 89B of the bearing housing 8B. One of the oil film damper forming portions 59A is formed on the side of the impeller 3 relative to the third groove 55A. Another oil film damper forming portion 59A is formed on the side of the turbine blade 2 relative to the fourth groove 55B. The other oil film damper forming portion 59A is formed between the first groove 54A and the second groove 54B.

One of the foreign matter regulating-gap forming portions 50A is formed between the first groove 54A and the third groove 55A. Another foreign matter regulating-gap forming portion 50A is formed between the second groove 54B and the fourth groove 55B. In the gap between each foreign matter regulating-gap forming portion 50A and the bearing support surface 89B, a foreign matter regulating gap 91 is formed to block passing of a foreign matter of a size that is equal to or larger than a predetermined size.

Similarly to the first embodiment, the bearing support surface 89B of the bearing housing 8B according to the third embodiment includes the foreign matter collection portions 87, which communicate with the lowest positions of the circular oil paths formed between the first groove 54A of the full floating bearing 5B and the bearing support surface 89B and between the second groove 54B of the full floating bearing 5B and the bearing support surface 89B (direct communication is implemented without the intermediation of the foreign matter regulating gap and the oil film damper forming gap). The foreign matter collection portions 87 each may be a through hole as shown in the figure, or may be the above-described foreign matter collection portion 87A having a recessed portion (see FIG. 3). Also, the foreign matter collection portion 87 or 87A may communicate with the corresponding circular oil path at a position different from its lowest position.

In this embodiment, similarly to the first embodiment, the dimensions of the portions of the full floating bearing 5B are set. Specifically, the maximum gap in the radial direction of the foreign matter regulating gap 91 is smaller than the minimum internal diameter of the oil hole 58A. This reduces the possibility of the oil hole 58A being blocked by foreign matters in the lubricant.

The sum of the flow path area of the oil hole 58A and the flow path area of the gap space 9C, which is in the downstream side relative to the inlet of the oil hole 58A (which is the gap space between the bearing support surface 89B and the outer circumference of the full floating bearing 5B), is smaller than the flow path area of the foreign matter regulating gap 91. This eliminates the need for increasing the amount and pressure of the lubricant to be supplied, and ensures a sufficient amount of oil to be supplied to the side of the turbine shaft 1 through the oil hole 58A. Also, a sufficient amount of oil is supplied to the gap space 9C, which is in the downstream side relative to the third groove 55A and the fourth groove 55B, where the oil holes 58A are disposed. Thus, a preferable oil film damper is formed in the gap space 9C.

[Fourth Embodiment]

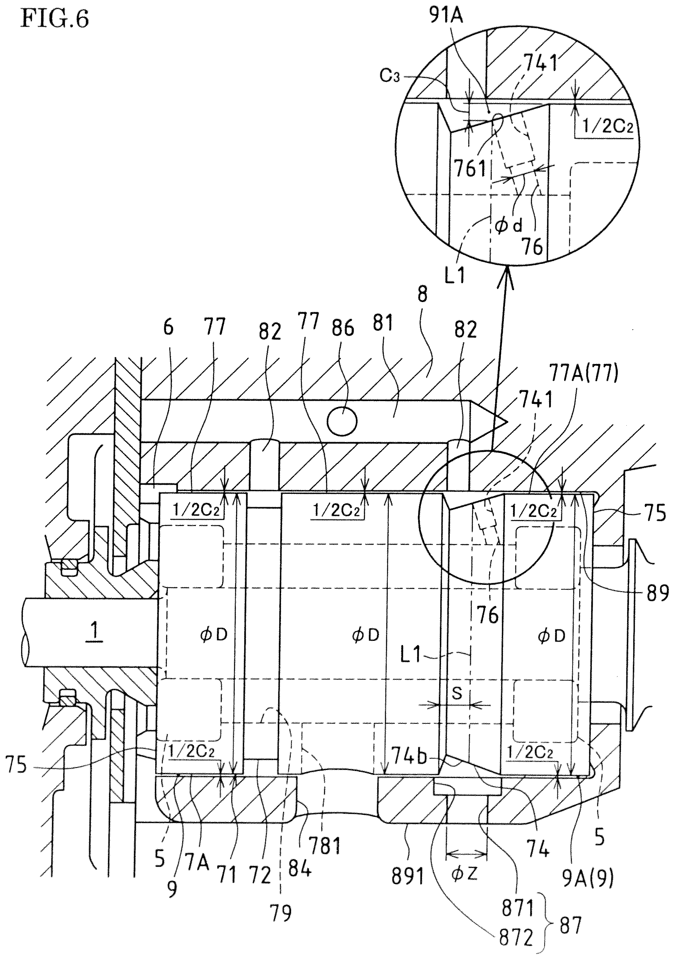

Next, a fourth embodiment of the present invention will be described by referring to FIG. 6. It is noted that like reference numerals designate corresponding or identical elements throughout the first to fourth embodiments, and these elements will not be described here.

The bearing device provided in the turbocharger according to this embodiment eliminates the second groove 55, which is employed in the bearing holder 7 of the first embodiment. The diverging path 82 of the lubricant supply passage 81 communicates with the circular oil path formed between the third groove 74 and the bearing holder support surface 89 (direct communication is implemented without the intermediation of the oil film damper forming gap).

The third groove 74 includes a tapered bottom surface 74b inclined relative to the axis of the turbine shaft 1. In this embodiment, the bottom surface 74b is decremental in the direction from the side of the turbine blade 2 to the side of the impeller 3 along the axis of the turbine shaft 1.

In this embodiment, a foreign matter regulating gap 91A is formed to block passing of a foreign matter of a size that is equal to or larger than a predetermined size. The foreign matter regulating gap 91A is formed in the gap in the radial direction between the bearing holder support surface 89 and an outer circumferential line L1 that passes in the circumferential direction through a portion 761 of the inlet outline of the lubricant ejection hole 76 closest to the axis of the rotor 1.

Assume that $C_3$ is a difference in radius between the oil film damper forming portion 77 and the circular outer circumferential line L1. Then, the maximum gap in the radial direction of the foreign matter regulating gap 91A is represented as $C_2 + C_3$. $C_2 + C_3$ satisfies the following formula 6.

$$C_2 + C_3 < d \ ... \ (6)$$

That is, the maximum gap $C_2 + C_3$ in the radial direction of the foreign matter regulating gap 91A is lower than the minimum internal diameter d of the lubricant ejection hole 76.

The downstream end of the diverging path 82 of the lubricant supply passage 81 communicates with the circular oil path formed between the third groove and the bearing holder support surface 89 in a region S, described later. The region S is a one-sided region of the circular oil path that is a gap in the radial direction larger than the gap in the radial direction of the foreign matter regulating gap 91A. In this embodiment, the region S is on the side of the compressor 3 in the axial direction relative to the foreign matter regulating gap 91A.

Similarly to the first embodiment, the foreign matter collection portion 87 is provided on the bearing holder support surface 89. The foreign matter collection portion 87 communicates with the lowest position of the circular oil path formed between the third groove 74 and the bearing holder support surface 89 (direct communication is implemented without the intermediation of the oil film damper forming gap). The foreign matter collection portion 87 may be a through hole as shown in the figure, or may be the above-described foreign matter collection portion 87A having a recessed portion (see FIG. 3). Also, the foreign matter collection portion 87 or 87A may communicate with the circular oil path at a position different from its lowest position.

In a turbocharger including the bearing holder 7 thus configured, when a lubricant is supplied by discharge from an oil supply hole 86 under a pressure that is equal to or higher than a predetermined level (a pressure that is equal to or higher than the necessary pressure to form the oil film damper), the lubricant is supplied to the first groove 72 and the third groove 74 through the lubricant supply passage 81 and the diverging paths 82. Then, the lubricant is supplied to the gap space 9 and the like via the first groove 72 and the third groove 74. This causes the oil film damper to be formed. The lubricant in the third groove 74 is ejected toward the ball bearing 5 from the lubricant ejection hole 76.

In this case, the formula 6 shows that the maximum gap $C_2 + C_3$ in the radial direction of the foreign matter regulating gap 91A is lower than the minimum internal diameter d of the lubricant ejection hole 76. Accordingly, there is a high possibility that the foreign matters passable through the foreign matter regulating gap 91A pass through the lubricant ejection hole 76. This reduces the possibility of the lubricant ejection hole 76 being blocked by the foreign matters in the lubricant.

Foreign matters than cannot pass through the foreign matter regulating gap 91A fall in the downward direction of the third groove 74 and are collected into the foreign matter collection portion 87. The foreign matters collected into the foreign matter collection portion 87 are discharged in the downward direction from the small diameter hole portion 872 of the foreign matter collection portion 87.

In the embodiments, the bearing device according to the present invention is applied to a turbocharger. The bearing device according to the present invention, however, is not limited to turbochargers, but can be applied to rotary devices of other types.

Industrial Applicability

The present invention finds applications in, for example, bearing devices including bearing portions each forming an oil film damper between the bearing housing and the bearing portion and supporting the turbine shaft in the bearing housing.

Description of the Reference Numeral

| | |
|---|---|
| L1 | Outer circumferential line |
| S | Region |
| 1 | Turbine shaft (rotor shaft) |
| 5 | Ball bearing (bearing portion) |
| 5A | Semi-floating bearing |
| 5B | Full floating bearing |
| 7, 7A | Bearing holder (bearing portion) |
| 8 | Bearing housing |
| 87 | Foreign matter collection portion (through hole to collect foreign matters) |
| 87A | Foreign matter collection portion (recessed portion to collect foreign matters) |
| 54, 55, 72, 73, 74 | Grooves (circular oil paths) |
| 58 | Oil hole |
| 74 | Third groove |
| 74b | Bottom surface |
| 76 | Lubricant ejection hole (oil hole) |
| 81 | Lubricant supply passage (oil supply path) |
| 82 | Diverging path |
| 91, 91A | Foreign matter regulating gap |
| 761 | Portion of an inlet outline closest to the axis of the rotor |

**Claims**

1. A bearing device comprising:

   a bearing portion supporting a rotor shaft (1) in a bearing housing (8, 8A, 8B);
   a circular oil path formed in a circumferential direction between the bearing housing and the bearing portion; and
   an oil hole (76, 58, 58A) penetrating through the bearing portion from an outer circumference to an inner circumference of the bearing portion so as to receive a supply of oil from the circular oil path,
   wherein a foreign matter regulating gap (91, 91A) comprising a gap between the bearing portion and the bearing housing (8, 8A, 8B) is formed between the circular oil path and the oil hole, and

wherein a maximum value of a gap of a radial direction of the foreign matter regulating gap is smaller than a minimum value of an internal diameter of the oil hole,

wherein the bearing portion supports the rotor shaft (1) in the bearing housing (8, 8A, 8B) with an oil film damper formed between the bearing portion (5, 5A, 5B) and the bearing housing,

**characterized in that** a sum of a flow path area of the oil hole (76, 58, 58A) and a flow path area of an oil film damper forming gap (9, 9A, 9B, 9C) that forms the oil film damper in a downstream side of the foreign matter regulating gap (91, 91A) is smaller than a flow path area of the foreign matter regulating gap (91, 91A).

2. The bearing device according to claim 1,

wherein the bearing portion is fitted in the bearing housing (8), and comprises a bearing holder (7) configured to form the oil film damper between the bearing holder (7) and the bearing housing (8) and comprises a ball bearing (5) supporting the rotor shaft (1) in the bearing holder,

wherein the circular oil path is formed between the bearing housing (8) and bearing holder (7) in the circumferential direction, and

wherein the oil hole comprises an oil ejection hole (76) penetrating through the bearing holder (7) from an outer circumference to an inner circumference of the bearing holder so as to receive a supply of oil from the circular oil path through the foreign matter regulating gap and so as to eject the oil toward the ball bearing (5) or to a vicinity of the ball bearing.

3. The bearing device according to claim 1,

wherein the bearing portion comprises a semi-floating bearing (5A) axially non-rotatably fitted in the bearing housing (8A).

4. The bearing device according to claim 1,

wherein the bearing portion comprises a full floating bearing (5B) axially rotatably fitted in the bearing housing (8B).

5. The bearing device according to any one of claims 1 to 4,

wherein a through hole (87) is formed in the bearing housing (8, 8A, 8B), the through hole communicating with the circular oil path so as to collect foreign matters in the circular oil path.

6. The bearing device according to any one of claims 1 to 4,

wherein a recessed portion (87A) is formed in the bearing housing (8), the recessed portion communicating with the circular oil path so as to collect foreign matters in the circular oil path.

7. The bearing device according to any one of claims 1 to 4,

wherein a through hole (87) is formed in the bearing housing (8), the through hole communicating with a lowest position of the circular oil path so as to collect foreign matters in the circular oil path.

8. The bearing device according to any one of claims 1 to 4,

wherein a recessed portion (87A) is formed in the bearing housing (8), the recessed portion communicating with a lowest position of the circular oil path so as to collect foreign matters in the circular oil path.

**Patentansprüche**

1. Lagervorrichtung, umfassend:

einen Lagerabschnitt, der eine Rotorwelle (1) in einem Lagergehäuse (8, 8A, 8B) stützt,

einen kreisförmigen Ölpfad, der in einer Umfangsrichtung zwischen dem Lagergehäuse und dem Lagerabschnitt ausgebildet ist, und

ein Ölloch (76, 58, 58A), das von einem Außenumfang zu einem Innenumfang des Lagerabschnitts durch den Lagerabschnitt hindurch verläuft, um eine Zufuhr von Öl von dem kreisförmigen Ölpfad zu empfangen,

wobei ein Fremdkörperregelspalt (91, 91A), der einen Spalt zwischen dem Lagerabschnitt und dem Lagergehäuse (8, 8A, 8B) umfasst, zwischen dem kreisförmigen Ölpfad und dem Ölloch ausgebildet ist, und

wobei ein maximaler Wert eines Spalts einer radialen Richtung des Fremdkörperregelspalts kleiner ist als ein minimaler Wert eines Innendurchmessers des Öllochs,

wobei der Lagerabschnitt die Rotorwelle (1) in dem Lagergehäuse (8, 8A, 8B) mit einem Ölfilmdämpfer stützt, der zwischen dem Lagerabschnitt (5, 5A, 5B) und dem Lagergehäuse ausgebildet ist,

**dadurch gekennzeichnet, dass** eine Summe eines Strömungspfadquerschnitts des Öllochs (76, 58, 58A) und eines Strömungspfadquerschnitts eines Ölfilmdämpferbildungsspalts (9, 9A, 9B, 9C), der den Ölfilmdämpfer auf einer stromabwärtigen Seite des Fremdkörperregelspalts (91, 91A) bildet, kleiner ist als ein Strömungspfadquerschnitt des Fremdkörperregelspalts (91, 91A).

2. Lagervorrichtung nach Anspruch 1,
   wobei der Lagerabschnitt in dem Lagergehäuse (8) montiert ist und einen Lagerhalter (7) umfasst, der dafür konfiguriert ist, den Ölfilmdämpfer zwischen dem Lagerhalter (7) und dem Lagergehäuse (8) zu bilden, und ein Kugellager (5) umfasst, das die Rotorwelle (1) in dem Lagerhalter stützt,
   wobei der kreisförmige Ölpfad zwischen dem Lagergehäuse (8) und dem Lagerhalter (7) in der Umfangsrichtung ausgebildet ist, und
   wobei das Ölloch ein Ölauswurfloch (76) umfasst, das durch den Lagerhalter (7) von einem Außenumfang zu einem Innenumfang des Lagerhalters hindurch verläuft, um eine Zufuhr von Öl von dem kreisförmigen Ölpfad durch den Fremdkörperregelspalt zu empfangen und um das Öl in Richtung des Kugellagers (5) oder in eine Nähe des Kugellagers auszuwerfen.

3. Lagervorrichtung nach Anspruch 1,
   wobei der Lagerabschnitt ein halb-schwimmendes Lager (5A) umfasst, das axial nicht-drehbar in dem Lagergehäuse (8A) montiert ist.

4. Lagervorrichtung nach Anspruch 1,
   wobei der Lagerabschnitt ein voll-schwimmendes Lager (5B) umfasst, das axial drehbar in dem Lagergehäuse (8B) montiert ist.

5. Lagervorrichtung nach einem der Ansprüche 1 bis 4,
   wobei ein Durchgangsloch (87) in dem Lagergehäuse (8, 8A, 8B) ausgebildet ist, wobei das Durchgangsloch mit dem kreisförmigen Ölpfad in Strömungsverbindung steht, um Fremdkörper in dem kreisförmigen Ölpfad aufzufangen.

6. Lagervorrichtung nach einem der Ansprüche 1 bis 4,
   wobei ein rückspringender Abschnitt (87A) in dem Lagergehäuse (8) ausgebildet ist, wobei der rückspringende Abschnitt mit dem kreisförmigen Ölpfad in Strömungsverbindung steht, um Fremdkörper in dem kreisförmigen Ölpfad aufzufangen.

7. Lagervorrichtung nach einem der Ansprüche 1 bis 4,
   wobei ein Durchgangsloch (87) in dem Lagergehäuse (8) ausgebildet ist, wobei das Durchgangsloch mit einer tiefsten Position des kreisförmigen Ölpfades in Strömungsverbindung steht, um Fremdkörper in dem kreisförmigen Ölpfad aufzufangen.

8. Lagervorrichtung nach einem der Ansprüche 1 bis 4,
   wobei ein rückspringender Abschnitt (87A) in dem Lagergehäuse (8) ausgebildet ist, wobei der rückspringende Abschnitt mit einer tiefsten Position des kreisförmigen Ölpfades in Strömungsverbindung steht, um Fremdkörper in dem kreisförmigen Ölpfad aufzufangen.

**Revendications**

1. Dispositif de palier comportant :

   une partie de palier supportant un arbre de rotor (1) dans un logement de palier (8, 8A, 8B) ;
   un passage d'huile circulaire formé dans une direction circonférentielle entre le logement de palier et la partie de palier ; et
   un trou d'huile (76, 58, 58A) pénétrant à travers la partie de palier depuis une circonférence extérieure jusqu'à une circonférence intérieure de la partie de palier de façon à recevoir une alimentation en huile depuis le passage d'huile circulaire,
   dans lequel un espace de régulation de corps étrangers (91, 91A) comportant un espace entre la partie de palier et le logement de palier (8, 8A, 8B) est formé entre le passage d'huile circulaire et le trou d'huile, et
   dans lequel une valeur maximale d'un espace d'une direction radiale de l'espace de régulation de corps étrangers est plus petite qu'une valeur minimale d'un diamètre interne du trou d'huile,

dans lequel la partie de palier supporte l'arbre de rotor (1) dans le logement de palier (8, 8A, 8B) avec un amortisseur de film d'huile formé entre la partie de palier (5, 5A, 5B) et le logement de palier,
**caractérisé en ce qu'**une somme d'une section de passage d'écoulement du trou d'huile (76, 58, 58A) et d'une section de passage d'écoulement d'un espace de formation d'amortisseur de film d'huile (9, 9A, 9B, 9C) qui forme l'amortisseur de film d'huile dans un côté aval de l'espace de régulation de corps étrangers (91, 91A) est plus petite qu'une section de passage d'écoulement de l'espace de régulation de corps étrangers (91, 91A).

2. Dispositif de palier selon la revendication 1,
dans lequel la partie de palier est montée dans le logement de palier (8), et comporte un support de palier (7) configuré pour former l'amortisseur de film d'huile entre le support de palier (7) et le logement de palier (8) et comporte un roulement à billes (5) supportant l'arbre de rotor (1) dans le support de palier,
dans lequel le passage d'huile circulaire est formé entre le logement de palier (8) et le support de palier (7) dans la direction circonférentielle, et
dans lequel le trou d'huile comporte un trou d'éjection d'huile (76) pénétrant à travers le support de palier (7) depuis une circonférence extérieure jusqu'à une circonférence intérieure du support de palier de façon à recevoir une alimentation en huile depuis le passage d'huile circulaire à travers l'espace de régulation de corps étrangers et de façon à éjecter l'huile vers le roulement à billes (5) ou au voisinage du roulement à billes.

3. Dispositif de palier selon la revendication 1,
dans lequel la partie de palier comporte un palier semi-flottant (5A) monté de manière axialement non rotative dans le logement de palier (8A).

4. Dispositif de palier selon la revendication 1,
dans lequel la partie de palier comporte un palier flottant (5B) monté de manière axialement rotative dans le logement de palier (8B).

5. Dispositif de palier selon l'une quelconque des revendications 1 à 4,
dans lequel un trou débouchant (87) est formé dans le logement de palier (8, 8A, 8B), le trou débouchant communiquant avec le passage d'huile circulaire de façon à recueillir des corps étrangers dans le passage d'huile circulaire.

6. Dispositif de palier selon l'une quelconque des revendications 1 à 4,
dans lequel une partie renfoncée (87A) est formée dans le logement de palier (8), la partie renfoncée communiquant avec le passage d'huile circulaire de façon à recueillir les corps étrangers dans le passage d'huile circulaire.

7. Dispositif de palier selon l'une quelconque des revendications 1 à 4,
dans lequel un trou débouchant (87) est formé dans le logement de palier (8), le trou débouchant communiquant avec une position la plus basse du passage d'huile circulaire de façon à recueillir les corps étrangers dans le passage d'huile circulaire.

8. Dispositif de palier selon l'une quelconque des revendications 1 à 4,
dans lequel une partie renfoncée (87A) est formée dans le logement de palier (8), la partie renfoncée communiquant avec une position la plus basse du passage d'huile circulaire de façon à recueillir les corps étrangers dans le passage d'huile circulaire.

FIG.1

EP 2 500 544 B1

EP 2 500 544 B1

FIG.2

16

EP 2 500 544 B1

FIG.3

17

FIG.4

FIG.5

EP 2 500 544 B1

FIG.6

FIG.7

1081 1073 108 1071 1074 1082 107 102

105 101 1085 105

103

EP 2 500 544 B1

## REFERENCES CITED IN THE DESCRIPTION

**Patent documents cited in the description**

- JP 2072329 A
- JP 6001737 A
- JP 2008504484 A
- JP 5014527 A
- US 4676667 A